# EUROPEAN PATENT APPLICATION

(11) **EP 3 252 228 A1**
(43) Date of publication of application: **06.12.2017**
(21) Application number: 16743591.6
(22) Date of filing: 29.01.2016
(51) Int. Cl.: D07B 1/06, B60C 9/00

(54) **RUBBER-ARTICLE-REINFORCING STEEL CORD AND TIRE**

(30) Priority: 30.01.2015 JP 2015017405
(71) Applicant: Bridgestone Corporation, Tokyo 104-8340 (JP)
(72) Inventor: OKAZAKI Ryota, Tokyo 104-8340 (JP)
(74) Representative: Oxley, Robin John George
(86) International application number: PCT/JP2016/052818
(87) International publication number: WO 2016/121988

(57) **Abstract**

Provided is a rubber article-reinforcing steel cord having improved shear fatigue resistance while reducing the weight of the steel cord by using a wire of high tensile strength. The rubber article-reinforcing steel cord 10 is a steel cord 10 having a two-layer twisted structure comprising a core filament 11 composed of a plurality of filaments and a sheath filament 12 composed of a plurality of filaments twisted around the core filament 11, wherein the tensile strength of the core filament 11 is higher than the tensile strength of the sheath filament 12, and the core filament 11 and the sheath filament 12 are twisted together in the same direction and the same pitch.

## Description

### TECHNICAL FIELD

The present invention relates to a rubber article-reinforcing steel cord and a tire using the steel cord.

### BACKGROUND ART

A steel cord to be used for a reinforcing layer such as a carcass or a belt of a heavy duty tire which is attached to a medium or large vehicle such as a truck or a bus demands high tensile strength (breaking load) so as to withstand a heavy load applied when such a tire is used. On the other hand, fuel saving performance is important for a heavy duty tire in the above application, and it is therefore strongly demanded to reduce the weight of each member constituting the tire. In the steel cord used for reinforcing the carcass ply and the belt of the tire, in order to obtain a desired high tensile strength with a small amount of iron, it is considered to use a wire of high tensile strength for a steel filament constituting the steel cord.

A steel cord obtained by twisting steel filaments made of a high tensile strength wire material has high tensile strength, and the wire diameter of the steel filament can be reduced accordingly, and therefore, a desired high tensile strength can be obtained with a smaller amount of iron than in the past. On the other hand, a tire using the steel cord for reinforcing a carcass ply has had a risk of shearing fatigue of the steel cord at a bead portion due to repeated forces pushing the carcass ply against a bead core at the bead portion of the tire when using the tire.

As a bundle-twisted two-layer twisted steel cord, a steel cord in which a gap exists between strand group cords constituting an outer layer, and strand groups constituting a center layer have a curl having a smaller pitch than that of a curl for twisting is disclosed (Patent Document 1). It is described that, in the steel cord of Patent Document 1, cord elongation is suppressed while rubber invasion is ensured and deterioration of fatigue property due to water corrosion is suppressed. However, the steel cord described in Patent Document 1 is not a steel cord in which deterioration of shear fatigue resistance of the steel cord in a bead portion due to repeated application of a force to push a carcass ply against a bead core at the bead portion of a tire during use of the tire is ameliorated.

### RELATED ART DOCUMENT

### PATENT DOCUMENT

Patent Document 1: Japanese Unexamined Patent Application Publication No. 2009-97115

### SUMMARY OF THE INVENTION

### PROBLEMS TO BE SOLVED BY THE INVENTION

The present invention provides a rubber article-reinforcing steel cord having improved shear fatigue resistance while reducing the weight of the steel cord by using a wire of high tensile strength and a tire to which the rubber article-reinforcing steel cord is applied as a reinforcing material.

### MEANS FOR SOLVING THE PROBLEMS

The rubber article-reinforcing steel cord of the present invention is a steel cord having a two-layer twisted structure comprising a core filament composed of a plurality of filaments and a sheath filament composed of a plurality of filaments twisted around the core filament, wherein the tensile strength of the core filament is higher than the tensile strength of the sheath filament, and the core filament and the sheath filament are twisted together in the same direction and the same pitch.

In the rubber article-reinforcing steel cord of the present invention, when the tensile strength of the core filament is Tc, and the tensile strength of the sheath filament is Ts, preferably, the ratio of Tc to Ts Tc/Ts satisfies the relationship 1.0 < Tc/Ts < 1.6. Preferably, the wire diameter of the core filament is equal to or larger than the wire diameter of the sheath filament, and when the wire diameter of the core filament is dc, and the wire diameter of the sheath filament is ds, more preferably, the ratio of dc to ds dc/ds satisfies the relationship 1.0 ≤ dc/ds ≤ 1.6. Further, it is preferable that there are three core filaments and nine sheath filaments described above. Such a rubber article-reinforcing steel cord is suitably used for reinforcing a carcass ply among tire members.

The tire of the present invention is characterized in that the above-described rubber article-reinforcing steel cord of the present invention is used as a reinforcing material.

### EFFECTS OF THE INVENTION

According to the present invention, since the steel cord is a two-layer twisted steel cord and the tensile strength of the core filament is higher than the tensile strength of the sheath filament, the shear strength of the steel cord can be improved, thereby improving the shear fatigue resistance.

### BRIEF DESCRIPTION OF THE DRAWING

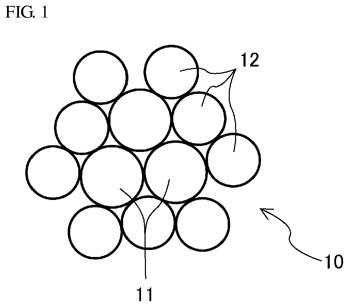

FIG. 1 is a cross-sectional view of one embodiment of a rubber article-reinforcing steel cord of the present invention.

Hereinafter, an embodiment of a rubber article-reinforcing steel cord of the present invention will be specifically described with reference to the drawing.

The rubber article-reinforcing steel cord 10 (hereinafter, also simply referred to as "steel cord 10") of the present embodiment illustrated in FIG. 1 comprises a plurality of core filaments 11 and a plurality of sheath filaments 12 twisted around the core filament 11. The steel cord 10 in FIG. 1 has a two-layer twisted structure of M+N, where M is the number of core filaments 11 and N is the number of sheath filaments. In the example shown in the figure, it has a 3 + 9 structure in which M is 3 and N is 9. The steel cord 10 of the present embodiment is a steel cord used for a heavy duty tire, and does not need a tensile strength required for a double twisted structure, rather the cord has a two-layer twisted structure for weight reduction. The number M of the core filaments 11 is preferably from 2 to 3, and the number N of the sheath filaments is preferably 6 or more. A more preferable embodiment is a 3+9 structure of a combination in which M is 3 and N is 9 as illustrated.

In the steel cord 10 of the present embodiment, the tensile strength Tc of the core filament 11 is higher than the tensile strength Ts of the sheath filament 12. In other words, the relationship between the tensile strength Tc of the core filament 11 and the tensile strength Ts of the sheath filament 12 is Tc > Ts.

The shear fatigue resistance of the steel cord used for reinforcing a carcass ply in a bead portion of a tire is correlated with the shear strength which is the breaking strength in the cross-section direction of the steel cord. When the shear strength of the steel cord decreases, a force with which the carcass ply is pressed against a bead core, that is, the fatigue resistance against a stress in the shear direction of the steel cord is reduced. In order to reduce the weight of a steel cord, when a high tensile strength wire is used for a steel filament constituting the steel cord, the shear strength of the steel cord has decreased. Therefore, the steel cord composed of steel filaments of high tensile strength was fatigued by repetition of shear stress, and as a result, there was a possibility of lowering the shear fatigue resistance in a bead portion of a tire.

On the other hand, the shear strength of a steel cord is improved by using steel filaments of relatively low tensile strength in addition to high tensile strength steel filaments. In a two-layer twisted cord, the tensile strength of a sheath filament has the greater influence on the shear strength compared to the tensile strength of a core filament. Specifically, in the two-layered steel cord, the inventor has confirmed that a steel cord with the tensile strength of a sheath filament lower than the tensile strength of a core filament has higher shear strength than a steel cord with the tensile strength of a core filament lower than the tensile strength of a sheath filament.

Therefore, as with the steel cord 10 of the present embodiment, the shear strength can be improved by the cord structure which makes the tensile strength of the sheath filament 12 lower than the tensile strength of the core filament 11. In other words, in the steel cord 10 of the present embodiment, the tensile strength of the sheath filament 12 is made lower than that of the core filament 11 while securing high strength or weight reduction of the steel cord 10 by increasing the tensile strength of only the core filament 12, thereby improving shear strength, shear fatigue resistance, and in turn, bead failure resistance, which is suppression of fatigue rupture of steel cord at a bead portion of a tire.

Preferably, the ratio Tc/Ts of the tensile strength Tc of the core filament 11 to the tensile strength Ts of the sheath filament 12 satisfies the relationship 1.0 < Tc/Ts < 1.6. In the range where the ratio of Tc to Ts is more than 1.0 and less than 1.6, an effect in which Tc is made higher than Ts is obtained, and in addition, the tensile strength of steel cord is sufficiently obtained, and moreover, bead failure resistance and cut resistance are excellent. More preferably, the relationship 1.0 < Tc/Ts ≤ 1.3 is satisfied.

The tensile strength Tc of the core filament 11 and the tensile strength Ts of the sheath filament 12 satisfy the relationship Tc > Ts, and preferably, both of them are within a range of about from 2,500 to 5,000 MPa satisfying the relation 1.0 < Tc/Ts < 1.6. When Tc and Ts are about from 2,500 to 5,000 MPa, the tensile strength of a steel cord satisfying requirements for heavy duty tires can be obtained for a two-layer twisted steel cord.

Although depending on the number, the wire diameters, or the like of core filaments and/or sheath filaments, more preferably, the tensile strength Tc of the core filament 11 is higher than the tensile strength Ts of the sheath filament, for example, by about 300 MPa.

In the steel cord 10 of the present embodiment, the core filament 11 and the sheath filament 12 are twisted in the same direction and at the same pitch. The structure of such a steel cord in which the core filament 11 and the sheath filament 12 are twisted in the same direction and at the same pitch is also called a compact structure. Since the core filament 11 and the sheath filament 12 are twisted in the same direction and at the same pitch, the effect of improving bead failure resistance described above more clearly appears.

For heavy duty tires, cut resistance is also demanded. The steel cord 10 of the present embodiment obtains favorable cut resistance by inhibiting the core filament 11 which receives a tightening force from the sheath filament 12 from being preliminarily broken due to stress concentration when a load is applied to the steel cord 10 when the tire is used. More specifically, since the cord structure is a two-layer twisted structure, as compared with a steel cord having a three-layer twisted structure, a clamping force applied to the core filament 11 is relaxed, and the cut resistance is improved. By using a wire having a certain degree of ductility for the core filament 11, the core filament 11 can be prevented from being preliminarily broken due to stress concentration, thereby improving cut resistance. Further, since the core filament 11 and the sheath filament 12 are twisted in the same direction and at the same pitch, the core filament 11 and the sheath filament 12 are in linear contact. Accordingly, as compared with a steel cord in which a core filament and a sheath filament are not twisted in the same direction at the same pitch and are in point contact with each other, the contact area between the filaments is increased, and therefore, when a tension is applied to the steel cord, each filament bears a tension force, and as a result, the core filament 11 can be prevented from being preliminarily broken due to stress concentration, thereby obtaining favorable cut resistance.

As can be seen from the above, the steel cord 10 of the present embodiment in which the core filament 11 and the sheath filament 12 are twisted in the same direction and at the same pitch has not only improved bead failure resistance but also improved cut resistance.

In the steel cord 10 of the present embodiment, the core filament 11 may have the same wire diameter as the sheath filament 12. However, it is more preferable for each core filament 11 to have a larger wire diameter than each sheath filament 12, for the following reason. In a steel cord of a compact structure in which the core filament 11 and the sheath filament 12 are twisted in the same direction and at the same pitch with a two-layer twisted structure, since the wire diameter of the core filament 11 is larger than the wire diameter of the sheath filament 12, in the steel cord, the proportion of the steel filament area included in the circumscribed circle of the cord in the cross-section, in other words, the filling factor of the steel filament in the steel cord becomes high, and therefore, a steel cord having a predetermined tensile strength can be obtained even when the thickness of a treat formed by embedding the steel cord in a rubber sheet is reduced.

A steel cord of a compact structure in which the wire diameter of the core filament 11 is larger than the wire diameter of the sheath filament 12 is subjected to a force dispersed by a plurality of filaments of the sheath filament 11 when a force in the shearing direction is applied. Therefore, when a force is applied in the shearing direction, each of such sheath filaments 12 receives less stress, and therefore, the cut resistance is excellent, compared to a steel cord in which the wire diameter of the core filament 11 is equal to that of the sheath filament 12 where mainly one of the sheath filaments 12 receives the force.

When the wire diameter of a core filament is dc and the wire diameter of a sheath filament is ds, the ratio of the wire diameter dc of the core filament 11 to the wire diameter ds of the sheath filament 12 dc/ds preferably satisfies the relationship 1.0 ≤ dc/ds ≤ 1.6. When the ratio of dc to ds is in the range of 1.0 or more and 1.6 or less, improvement in bead failure resistance and cut resistance can be effectively obtained. More preferably, the relationship 1.0 ≤ dc/ds ≤ 1.2 is satisfied.

The wire diameter dc of the core filament 11 and the wire diameter ds of the sheath filament 12 are preferably within a range of about from 0.15 to 0.25 mm satisfying the relationship 1.0 ≤ dc/ds ≤ 1.6 described above. When dc and ds are about from 0.15 to 0.25 mm, a tensile strength of a steel cord satisfying requirements for heavy load can be obtained in a two-layer twisted steel cord.

In order to secure the strength of a carcass ply of a tire, preferably, in the rubber article-reinforcing steel cord 10 of the present embodiment, each filament to be used is a steel material having a carbon content of from 0.70 to 1.10% by mass.

In order to enhance the adhesion with rubber when used for reinforcement of a tire, alloy plating mainly composed of copper and zinc is applied to the surfaces of the core filament 11 and the sheath filament 12 of the steel cord 10.

The steel cord of the present invention can be used for rubber article reinforcement, specifically as a tire reinforcing member. For example, a large number of steel cords are aligned parallel to each other at predetermined intervals and embedded in a rubber sheet to prepare a rubberized cloth (treat), and this rubberized cloth can be applied as a reinforcing material to at least one of a carcass ply and a belt of a tire. Examples of a tire of the present invention to which the steel cord of the present invention is applied as a reinforcing material include a tire comprising a tread portion, a pair of side portions continuous with both shoulders of the tread portion, and a pair of bead portions formed on the inner peripheries of the side portions and further comprising a carcass ply layer reinforced with a belt layer embedded in the inside of the tread portion, and in which the steel cord of the present invention is used as a reinforcing material for the belt layer and/or the carcass ply layer. Since the steel cord of the present invention is excellent in bead failure resistance and cut resistance, it is particularly suitable for use as a carcass ply.

### EXAMPLES

A variety of steel cords listed on Table 1 and Table 2 were produced. In Examples 1 to 6 of Table 1, the cross-sectional structure orthogonal to the cord axis of these steel cords is a 3+9 compact structure illustrated in FIG. 1. In Comparative Examples 1 to 8 of Table 2, the cross-sectional structure is a two-layer twisted structure having the number of core filaments and sheath filaments listed on Table 2. Table 1 listed the tensile strength and wire diameter of the core filament and the sheath filament of each Example, and Table 2 listed the tensile strength and wire diameter of the core filament and the sheath filament of each Comparative Example. Table 1 and Table 2 also listed the shear fatigue indexes of Examples and Comparative Examples.

In Table 1 and Table 2, the tensile strength of a filament is a value obtained by dividing the breaking strength by the cross-sectional area when a filament is pulled in the direction of the filament axis at a speed of 20 mm/min by an Instron tensile testing machine, and the unit is MPa.

Regarding the shear fatigue properties in Tables 1 and 2, using a three-point bending mode test apparatus combining a wedge-shaped protrusion and a pulley which applies a force in a shearing direction to a twisted cord, a predetermined cord tension is given and the wedge-shaped protrusion is pressed against the cord three million times at a frequency of 10 Hz. The maximum pressing depth at which the protrusion is pressed at various depths and cord breakage or filament breakage after the test does not occur is defined as shear fatigue property. The higher the value, the better the fatigue property against a shear input, and at the same time, the better the bead failure resistance is.

**[Table 1]**

| | | Example 1 | Example 2 | Example 3 | Example 4 | Example 5 | Example 6 |
|---|---|---|---|---|---|---|---|
| Core filament | Number of filaments | 3 | 3 | 3 | 3 | 3 | 3 |
| | Twisting direction | S | S | S | S | S | S |
| | Twisting pitch (mm) | 10 | 10 | 10 | 10 | 10 | 10 |
| | Filament diameter dc (mm) | 0.24 | 0.23 | 0.24 | 0.24 | 0.24 | 0.24 |
| | tensile strength Tc (MPa) | 3600 | 3600 | 3600 | 3900 | 3900 | 3900 |
| Sheath filament | Number of filaments | 9 | 9 | 9 | 9 | 9 | 9 |
| | Twisting direction | S | S | S | S | S | S |
| | Twisting pitch (mm) | 10 | 10 | 10 | 10 | 10 | 10 |
| | Filament diameter ds (mm) | 0.225 | 0.215 | 0.205 | 0.225 | 0.225 | 0.205 |
| | tensile strength Ts (MPa) | 3200 | 3200 | 3200 | 3200 | 3000 | 3000 |
| Filament tensile strength ratio Tc/Ts | | 1.13 | 1.13 | 1.13 | 1.22 | 1.3 | 1.3 |
| Filament diameter ratio dc/ds | | 1.07 | 1.07 | 1.17 | 1.07 | 1.07 | 1.17 |
| Shear fatigue index | | 112 | 115 | 119 | 110 | 114 | 116 |

**[Table 2]**

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Core filament | Number of filaments | 3 | 3 | 3 | 3 | 3 | 3 | 3 | 3 |
| | Twisting direction | S | S | S | S | S | S | S | S |
| | Twisting pitch (mm) | 10 | 10 | 10 | 10 | 10 | 10 | 10 | 10 |
| | Filament diameter dc (mm) | 0.24 | 0.23 | 0.24 | 0.23 | 0.24 | 0.23 | 0.24 | 0.23 |
| | tensile strength Tc (MPa) | 3200 | 3200 | 3200 | 3200 | 3600 | 3600 | 3600 | 3600 |
| Sheath filament | Number of filaments | 9 | 9 | 9 | 9 | 9 | 9 | 9 | 9 |
| | Twisting direction | Z | Z | S | S | Z | Z | S | S |
| | Twisting pitch (mm) | 10 | 10 | 15 | 15 | 10 | 10 | 15 | 15 |
| | Filament diameter ds (mm) | 0.225 | 0.215 | 0.225 | 0.215 | 0.225 | 0.215 | 0.225 | 0.215 |
| | tensile strength Ts (MPa) | 3200 | 3200 | 3200 | 3200 | 3600 | 3600 | 3600 | 3600 |
| Filament tensile strength ratio Tc/Ts | | 1 | 1 | 1 | 1 | 1 | 1 | 1 | 1 |
| Filament diameter ratio dc/ds | | 1.07 | 1.07 | 1.07 | 1.07 | 1.07 | 1.07 | 1.07 | 1.07 |
| Shear fatigue index | | 100 | 102 | 103 | 105 | 78 | 82 | 87 | 90 |

From Table 1 and Table 2, the steel cords of Examples 1 to 6 according to the present invention and the tires using these steel cords were superior to those of Comparative Examples.

### DESCRIPTION OF SYMBOLS

10: steel cord, 11: core filament, 12: sheath filament

## Claims

1. A rubber article-reinforcing steel cord having a two-layer twisted structure comprising:
a core filament composed of a plurality of filaments; and
a sheath filament composed of a plurality of filaments twisted around the core filament, wherein
the tensile strength of the core filament is higher than the tensile strength of the sheath filament, and
the core filament and the sheath filament are twisted together in the same direction and the same pitch.

2. The rubber article-reinforcing steel cord according to claim 1, wherein, when the tensile strength of the core filament is Tc, and the tensile strength of the sheath filament is Ts, the ratio of Tc to Ts Tc/Ts satisfies the relationship 1.0 < Tc/Ts < 1.6.

3. The rubber article-reinforcing steel cord according to claim 1, wherein the wire diameter of the core filament is equal to or larger than the wire diameter of the sheath filament.

4. The rubber article-reinforcing steel cord according to claim 3, wherein when the wire diameter of the core filament is dc, and the wire diameter of the sheath filament is ds, the ratio of dc to ds dc/ds satisfies the relationship 1.0 ≤ dc/ds ≤ 1.6.

5. The rubber article-reinforcing steel cord according to claim 4, wherein there are three of the core filaments and nine of the sheath filaments.

6. The rubber article-reinforcing steel cord according to claim 1 which is used for reinforcing a carcass ply among tire members.

7. A tire **characterized in that** the rubber article-reinforcing steel cord according to claim 1 is used as a reinforcing material.
